(19) Europäisches Patentamt
European Patent Office
Office européen des brevets

(11) **EP 4 333 089 A1**

(12) **EUROPEAN PATENT APPLICATION**

(43) Date of publication:
**06.03.2024 Bulletin 2024/10**

(21) Application number: **22193807.9**

(22) Date of filing: **05.09.2022**

(51) International Patent Classification (IPC):
**H01M 4/04** *(2006.01)* **H01M 4/139** *(2010.01)*

(52) Cooperative Patent Classification (CPC):
**H01M 4/0404; H01M 4/139**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Energy Solution, Ltd.**
**Seoul 07335 (KR)**

(72) Inventor: **AN, Jae Sung**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **BATTERY MANUFACTURING METHOD AND SYSTEM**

(57)    Disclosed is a method of manufacturing a battery, particularly a secondary battery. An active material is deposited on a substrate. An insulator material is deposited on the substrate such as to extend over a boundary between the active material and the substrate. The insulator material includes an insulator component and a liquid component. A indicative wet thickness of the insulator material is determined at a position on the substrate that is offset from the boundary by a characteristic measurement distance. The depositing of the insulator material is adapted as a function of the indicative wet thickness.

**FIG. 4**

**Description**

TECHNICAL FIELD

The present invention relates to a battery manufacturing method and a battery manufacturing system. In particular, the present invention relates to a method that can be carried out for forming an electrode of a battery, and a system that is operable for forming an electrode of a battery.

TECHNICAL BACKGROUND

An electrode of a battery usually contains an active material deposited on a (conductive) substrate, which may be an electrically conductive plate. In some manufacturing processes or systems, an insulation coating may be provided that covers a part of the conductive substrate along a boundary (which may be also referred to as an edge, edge portion, periphery or the like) of the active material deposited on the substrate. Such an insulation coating may ensure sufficient electrical insulation of the conductive substrate that may be used, for example, as a current collector of an electrode of a battery.

In view of this, it may be beneficial to precisely control the deposition of the insulation coating in terms of a thickness of the deposited insulation coating on the substrate. Also, it may be beneficial to precisely control the deposition of the insulation coating in terms of a position of the deposited insulation coating relative to the material present on the substrate, particularly an active material of an electrode of a battery. Hence, a technical problem may relate to optimizing the thickness and the position of an insulation coating deposited on a substrate.

SUMMARY OF INVENTION

Herein, the terms a "system", a "battery manufacturing system" and a "system for manufacturing a battery" may be used interchangeably. Furthermore, the terms a "method" a "battery manufacturing method" and a "method of manufacturing a battery" may be used interchangeably herein. The method as disclosed herein may be carried out in an automatic manner. For this purpose, the method may be provided as a sequence of instructions in/on a machine-readable medium such as to be carried out by a processor.

The battery manufacturing system as disclosed herein may be configured to carry out the battery manufacturing method disclosed herein, facultatively including any of the features and method steps. Accordingly, where any feature of a battery manufacturing method is described, this feature may also apply to the corresponding battery manufacturing system and/or may be combined with features of a corresponding battery manufacturing system. Similarly, where a feature of a battery manufacturing system is described, this feature may also apply to a corresponding battery manufacturing method and/or may be combined with features of a corresponding battery manufacturing method. Particularly, the features of the battery manufacturing method and the features of the battery manufacturing system do not limit one another, unless indicated otherwise or technically inappropriate. In accordance with this understanding, the battery manufacturing method and the battery manufacturing system may be described in combination for the sake of the brevity of the description.

A, or "the", battery as referred to herein may be or include a general electrochemical cell for energy storage. More specifically, the battery as referred to herein may be or include a secondary battery and/or a primary battery. Herein, a secondary battery may refer to or include a rechargeable battery. Particularly, the battery may comprise one or more layers of electrodes and one or more layers of separators stacked (e.g., wound up) in a specific manner. The battery may be or include a coin-type, cylindrical, prismatic, or pouch-type battery. In a specific example, the battery maybe configured to power a machine or device that is remote from a power grid, such as an electric vehicle, a mobile device or the like.

Further, terms and expressions indicated in parentheses are used herein for avoiding repetitions in the description. Such terms and expressions in parentheses may indicate an optional term or optional expression that may be used alternative or additionally in the respective passage.

Generally, the battery manufacturing as referred to herein also contemplates the manufacturing of a prototype of a battery. Nonetheless, a reference will be made to "a" battery hereinafter and thus refer generally to the manufacturing of one of plural identical batteries without limiting the subject matter to the manufacture of any one particular and specific battery. Particularly, the subject matter as claimed may envisage an automated (mass) production of batteries.

The technical problems from the known prior art may be addressed by the subject matter as defined in the independent claims. Particular embodiments are given by the features of the dependent claims.

There is provided a method of manufacturing a battery, particularly a secondary battery. The method may comprise the following steps, which maybe carried out in that order, however without being bound to that specific order:

Depositing an active material on a substrate.

Depositing an insulator material on the substrate, and/or on the active material, such as to extend over a boundary between the active material and the substrate, wherein the insulator material includes an insulator component and a liquid component.

Determining a indicative wet thickness of the insulator material at a position on the substrate that is offset from the boundary by a characteristic measurement distance.

Adapting the depositing of the insulator material as a function of the indicative wet thickness.

After deposition of the insulator material, the liquid component of the insulator material evaporates in the course of manufacturing a battery, and the insulator component of the insulator material remains as deposited. In some of the conventional methods and systems, a thickness and position of the remaining insulator component may be examined after the liquid component of the insulator material evaporates. If the results are not satisfactory, the deposition of the insulator material may be modified (adapted), the whole preparation process including the deposition and evaporation may be repeated, and the thickness and the position of the remaining insulator component may be examined again. This procedure requires a lot of time, energy and material.

In view of this, the battery manufacturing method and the battery manufacturing system as disclosed herein provide for the indicative wet thickness of the insulator material to be determined in real-time. The claimed subject matter leverages the fact that there is a correlation between a thickness of the remaining insulator component of the insulator material and the indicative wet thickness of the insulator material. Accordingly, a thickness of the insulator component of the insulator material, that will remain on the substrate after the evaporation of the liquid component of the insulator material, can be estimated from the determined indicative wet thickness. In this manner, the battery manufacturing method and the battery manufacturing system as disclosed herein allow for a real-time estimation of the thickness of a solid insulation coating on the substrate. This also may apply to the deposition of the solid insulation coating on the active material deposited on the substrate as well as on the boundary between the active material and the substrate.

Further, the battery manufacturing method and system as disclosed herein provides for the deposition of the insulator material to be adapted as a function of the determined indicative wet thickness, thereby enabling an accurate and real-time control of the deposition of a solid insulation coating on the substrate. This also may apply to the deposition of the solid insulation coating on the active material deposited on the substrate as well as on the boundary between the active material and the substrate. Consequently, the battery manufacturing method and system as disclosed herein may allow for a precise control of the deposition of the insulator material in a material, cost, time and energy saving manner.

As mentioned, a battery may include an electrode, which may be a positive electrode or a negative electrode. The electrode may comprise a substrate and an active material deposited on the substrate. The active material may be specifically prepared for a respective type of the electrode. For example, the active material may contain lithium for a positive electrode. Generally, the expression "deposition" used herein expresses providing a material on another in any suitable manner, unless specifically indicated otherwise. For example, the deposition may be or include discharging a material from an ejector, such as by pressing through a die or by extrusion using an extrusion setup. In other examples, the deposition may be or include spraying the material over a target surface, whereby an ejector may be considered to include a nozzle or nozzle arrangement. In particular, the deposition may refer to the provision of an active material on a substrate, and the provision of the insulator material on the substrate (and on the active material, if applicable).

After deposition, the active material may occupy a partial area of a surface of the substrate on which the active material is deposited. Accordingly, the deposited active material extends up to a boundary. The boundary may indicate a material boundary between the active material and the surface in a plan view on the substrate. The active material may be a flowable material mixture, and the deposited active material may therefore spread out as far as the boundary. The boundary may correspond to an edge of the active material deposited on the substrate, and the expressions boundary and edge may be used herein in an interchangeable manner, unless indicated otherwise or technically inappropriate. Further herein, an edge portion may indicate a portion of the active material along and in vicinity the boundary or the edge. As discussed below, the edge portion may be defined by sliding or a sliding portion. Herein, the expression "boundary" is used to specifically indicate the boundary between the substrate and the deposited active material, unless indicated otherwise.

Herein, the active material being deposited on the substrate may be referred to as a deposited active material. The boundary between the deposited active material and the substrate may be substantially linear along a particular direction, particularly along a process direction. However, the deposited active material may be a flowable material mixture, and therefore naturally form a boundary that is not perfectly linear, but substantially or in general or in average aligned to a straight line, particularly parallel to a process direction. Herein, the process direction may be a direction in which the substrate is moved while the active material and/or the insulator material is deposited on the substrate.

The edge portion of the deposited active material may exhibit a so-called sliding, and/or form a sliding portion, in which the thickness of the deposited active material smoothly decreases outwardly. Further according to the sliding, and/or in the sliding portion, a top surface opposite to the substrate may be concavely curved (bulged upwardly). The sliding or the sliding portion may arise due to characteristics of the active material, such as a flowability, a viscosity, a surface tension and/or a friction against the surface of the substrate.

The method and system disclosed herein may be carried out and operable, respectively, to manufacture a battery, particularly a secondary battery, that includes an electrode. In this context, the substrate may serve as a current collector for an electrode of a battery. The substrate may be an electrically conductive substrate. The substrate may be or contain an electrically conductive material, such as a conductive metal or conductive metal alloy, for example aluminum, an alloy thereof, copper or an alloy thereof. The substrate may have a shape of a plate, a sheet, a foil, a film, a layer, or the like. The substrate may have a substantially flat top surface on which the active material and/or the insulator material is/are deposited. For the sake of the simplicity of the description, expressions such as top surface, top side, upward (direction), above and the like are used to indicate a normal direction of a major surface of the substrate on which the active material and/or the insulator material is/are deposited.

The active material of a battery may be provided as a viscous mixture which may also be referred to as a slurry. The active material deposited on an electrode substrate may then be dried, and optionally activated, to obtain an electrode for a battery. Hereinafter, the term battery may be or include a secondary battery. For the simplicity of the description, the expression active material may hereinafter also refer to a slurry that contains the active material and further components in a viscous and/or flowable mixture, unless indicated otherwise or technically inappropriate.

The active material may contain, for example, lithium-cobalt-oxide (LCO), lithium nickel cobalt manganese oxide (NCM), lithium nickel cobalt aluminum oxide (NCA), lithium manganese oxide (LMO), lithium nickel manganese spinel (LNMO), lithium iron phosphate (LFP). The active material may also contain graphite, lithium, or silicon. The active material may additionally comprise solid components, particularly solid conductive particles such as carbon black or carbon nanotubes. The active material may additionally contain dispersants.

The active material may comprise a binder to which a solid material is admixed. The binder may be a polymeric binder. The (polymeric) binder of the active material may contain polyvinylidene fluoride (PVDF), polymethyl acrylate (PMMA), carboxymethylcellulose (CMC), polyacrylate, xanthan gum, polyethylene glycol, or styrene butadiene. The active material may further contain a liquid component. The liquid component of the active material may include water or an organic solvent such as tetrahydrofuran (THF) or N-Methyl-2-pyrrolidon (NMP).

As mentioned, the insulator material may include an insulator component and a liquid component. Particularly, the insulator material may be or contain a mixture of the insulator component and the liquid component be prepared as a flowable or viscous mixture of the liquid component and the insulator component. In specific examples, the insulator material may be prepared by mixing the insulator component with the liquid component.

The liquid component may be any suitable liquid material that can be mixed with the insulator material. Particularly, the liquid component may be selected and/or prepared such as to provide a homogeneous (or a heterogeneous) mixture with the insulator component. The liquid component of the insulator material may be or include water or a water-based liquid, or an organic solvent, such as tetrahydrofuran (THF) or N-Methyl-2-pyrrolidon (NMP).

An evaporation point of the liquid component of the insulator material may be lower than an evaporation point of the insulator component of the insulator material (at a same pressure and under same other environmental conditions). As such, the liquid component may evaporate when exposed to a raised temperature, while the insulator component remains. the remaining insulator component may be further processed to obtain an insulation coating. Alternative or additionally, the processing of the insulator component may involve applying heat, (infrared) radiation or other form of energy to the insulator material, during which the liquid component evaporates.

The process of forming an insulation coating from the deposited insulator material, particularly from the insulator component thereof, may be referred to herein as a hardening process and/or a drying process, depending on the insulator material. The insulator component, and thus the insulation coating obtained therefrom, may refer to a substance and/or structure that provides electrical insulation, e.g., by preventing an electric current within a voltage range of interest (and/or within an electric field range of interest). For example, the insulator component may have an electrical conductivity of $10^{-8}$ S·cm$^{-1}$ or less and/or a specific electrical resistance of $10^8$ Ω·cm or higher.

The insulator component may be or contain a binder, particularly a polymeric binder. The hardening and/or drying process may be carried out after deposition of the insulator material on the substrate, where the (polymeric) binder may be cured (or polymerized) under exposure to heat, (infrared and/or UV) radiation or any suitable form of energy input, thereby forming an insulation coating. The (polymeric) binder of the insulator material may be or contain polyvinylidene fluoride (PVDF), polymethyl acrylate (PMMA), carboxymethylcellulose (CMC), polyacrylate, xanthan gum, polyethylene glycol, or styrene butadiene.

Alternatively or additionally, the insulator component may be or contain a ceramic material. The hardening and/or drying process may be carried out after deposition of the insulator material on the substrate, where the ceramic material may be calcinated or sintered or otherwise processed under exposure to heat, (UV) radiation or other form of energy input, thereby forming a solid insulation coating. Examples for the ceramic material may include oxide-based ceramics, such as aluminum oxide (alumina, Al2O3), zirconium dioxide (zirconia, ZrO2), titanium dioxide (TiO2), magnesium oxide (MgO), zinc oxide (ZnO), barium titanate (BTO), aluminum titanate (tialite, Al2TiO5), beryllium oxide (beryllia, BeO). Further examples of the insulator component include silicate-based materials, kaolinit, boron carbide (B4C), silicium carbide (SiC), silicon nitride (SiN), tungsten carbide (WC), molybdenum disilicide (MoSi2) and aluminum nitride (AlN).

In specific and non-exhaustive examples, the insulator component may contain one or a combination of the following: PVDF, aluminum hydroxide oxide (AlO(OH); such as boehmite, or diaspore), SBR-based ceramic material (styrene butadiene rubber) and alumina (Al2O3). In addition, the insulator component may contain solid additives, which may contain one or a combination of the following: a dye, a tannic acid and a dispersant. A ratio of the contents of the components of the insulator component may be determined empirically and be subject to an ongoing development and optimization process.

Some of specific, yet non-exhaustive, examples may be as follows. In a specific example, 90% to 99.9% of the insulator component may be made of PVDF (e.g., KF9700). In another specific example, 40% to 70%, preferably 50% to 60%, or more preferably 55% to 60% or 57.5% $\pm$ 1%, of the insulator component may be made of aluminum hydroxide oxide, while 25% to 60%, preferably 30% to 50%, or more preferably 35% to 45% or 40% of the insulator component may be made of SBR. In this specific example, a tannic acid may be added as an additive at a relative content of 0.5% to 5%, preferably 1% to 4% and more preferably 2% to 3% or 2.5% $\pm$ 0.2%, of the insulator component. In a yet other example, 40% to 90%, preferably 50% to 80%, and more preferably 60% to 70% or 65% $\pm$ 0.5%, of the insulator component may be made of alumina (e.g., AES11), while 20% to 45% preferably 25% to 35%, more preferably 30% to 35% or 32.5% $\pm$ 0.5% of the insulator component maybe made of PVDF (e.g., KF9700). In this specific example, a dispersant may be added as an additive at a relative content of 1% to 6%, preferably 1.5% to 5.5%, and more preferably 1.8% to 3.5% or 2.5% $\pm$ 0.5% of the insulator component. In a further specific example, 70% to 99%, preferably 75% to 95%, more preferably 80% to 90% or 87% $\pm$ 2%, of the insulator component may be made of aluminum hydroxide oxide, while 1% to 20%, preferably 5% to 15%, and more preferably 7% to 13% or 10% $\pm$ 1.5%, of the insulator component maybe made of PVDF (e.g., KF9700). In this specific example, a tannic acid may be added as an additive at a relative content of 1% to 6%, preferably 1.5% to 5%, and more preferably 2.5% to 4.5% or 3.5% $\pm$ 0.5%, of the insulator component.

The battery manufacturing method may comprise depositing an active material on a substrate. The active material may include any of the corresponding features described herein. The substrate may include any of the corresponding features described herein. Herein, the process of depositing may be referred to as deposition. The deposition may be as defined above, and may include any of the corresponding features described herein. Particularly, the deposition of the active material may be or include discharging the active material from an ejector, such as by pressing through a die, by extrusion or spraying the active material over the substrate.

As mentioned, the active material may be deposited on the substrate such as to occupy a partial area of a surface of the substrate. Accordingly, the deposited active material may extend in a width direction to a boundary. The width direction may be perpendicular to the process direction mentioned above and perpendicular to a thickness direction, in which any thickness as mentioned herein is measured. The width direction and the process direction may be both parallel to a major surface, which may be referred to as a top surface, of the substrate, on which the active material and the insulator material are deposited. Accordingly, the thickness direction may be perpendicular to the top surface of the substrate.

The boundary may include any of the corresponding features described herein. The boundary may be substantially linear, as mentioned above, and parallel to the process direction. Particularly, the boundary between the deposited active material and the substrate may be formed by an end face of the deposited active material facing in the width direction. More specifically, the boundary between the deposited active material and the substrate may be formed by not entirely covering the substrate, i.e., by leaving a portion of the substrate uncovered. The material boundary between the uncovered portion of the substrate and the deposited active material may be referred to as the boundary.

As mentioned, an edge of the deposited active material may be formed along the boundary. As such, the edge and boundary may be used in an interchangeable manner unless indicated otherwise or technically inappropriate. Yet, the edge may of the deposited active material may indicate the largest physical extent of the active material, while the boundary is the material boundary between the deposited active material and the substrate. Furthermore, an edge portion of the active material may be as mentioned and may refer to a three-dimensional part of the deposited active material along and adjacent to the boundary or the edge.

The boundary between the deposited active material and the substrate may include any of the corresponding features described herein. The edge of the deposited active material may include any of the corresponding features described herein. The edge portion of the deposited active material may include any of the corresponding features described herein.

The battery manufacturing method may comprise depositing an insulator material on the substrate such as to extend over a boundary between the active material and the substrate. The insulator material may include any of the corresponding features described herein. The boundary may include any of the corresponding features described herein. The insulator component may include any of the corresponding features described herein. The liquid component may include any of the corresponding features described herein. Furthermore, the deposition of the insulator material may be in principle identical or similar to the deposition of the active material described herein. Particularly, the deposition of the insulator material may be or include discharging the insulator material from an ejector, such as by pressing through a die, by extrusion, or by spraying over the substrate.

The insulator material may be deposited on the substrate such as to extend over the boundary between the deposited active material and the substrate. Accordingly, the deposited insulator material may extend also onto the deposited active material. In other words, the insulator material maybe deposited over both the substrate and the active material deposited on the substrate. In yet other words, the deposited insulator material may extend from on the substrate over the boundary onto the active material deposited on the substrate.

As mentioned, the insulator material may include an insulator component and a liquid component. The insulator component may include any of the corresponding features described herein. The liquid component may include any of the corresponding features described herein. Accordingly, an insulation coating may be formed by processing the insulator material according to the configurations of the insulator component and the liquid component of the insulator material.

The battery manufacturing method may comprise determining a indicative wet thickness of the insulator material at a position on the substrate. The position at which the indicative wet thickness is determined may be offset from the boundary between the substrate and the deposited active material by a characteristic measurement distance.

Herein, determining of any thickness may refer to physically determining, rather than estimation, simulation or calculation. In particular, the determining of any thickness may include measuring such thickness. The measuring of the thickness may be carried out using any known and suitable measurement method, for example using an optical measurement setup, particularly using a reflectance spectrometer. Such a reflectance spectrometer may employ a light source with a spectrum, for example in an (near) infrared near range and/or a visible range, or in a wavelength range of 400 nm to 1100 nm. The reflectance spectrometer may irradiate a measured area, for example with a spot size of 2 mm or less, particularly with a spot size of 1 mm to 1.5 mm. For this purpose, the reflectance spectrometer may employ a collimator that collimates the light from the light source. Furthermore, the reflectance spectrometer may employ a shutter that is electrically motorized. In one example, a portion of light from the light source is reflected at an incident surface of a target material (that is, the deposited insulator material, the remaining deposited material and/or the active material), while another portion of light is reflected on an interface of the target material with the substrate (as also recited herein). Accordingly, a phase shift between the different reflected portions of the light may be detected, and the thickness may be derived therefrom.

Using a solid measurement probe penetrating through the deposited insulator material and/or the deposited active material may be another option, however not preferable, because it may cause a structural damage to the insulation coating and/or the active material. While an absolute value of the determined thickness may (or may not) vary depending on a measurement setup, the claimed subject matter relates to the characteristic measurement position where the thickness of the deposited insulator material is determined, rather than to the absolute values of the thickness. In other words, as long as the same measurement setup is used for determining the thicknesses of both the deposited insulator material and the remaining insulator material, the claimed subject matter is unaffected by which particular type of measurement setup is used.

The indicative wet thickness may indicate a thickness of the insulator material at the position, the position being defined by the characteristic measurement distance from the boundary between the substrate and the deposited active material. The position may also be referred to as a characteristic measurement position. Accordingly, the characteristic measurement position may be determined/defined by the characteristic measurement distance from the boundary. The indicative wet thickness may be a thickness of the insulator material deposited on the substrate at the characteristic measurement position. As such, the characteristic measurement distance, the characteristic measurement position and the indicative wet thickness may be interlinked.

The inventor discovered that there is a predictable, and thus reproducible, relationship between a thickness (which may be referred to herein as a dry thickness) of an insulation coating, that is obtained from by deposition and processing of the insulator material in a manner as mentioned above, and a thickness (that is, the indicative wet thickness) of the insulator material deposited on the substrate at a particular position. This particular position may correspond, or be, the aforementioned characteristic measurement position offset from the boundary by the characteristic measurement distance.

In particular, a content (e.g., percentage, wt.%) of the insulator component maybe determined by weight (or volume) of the (total) insulator material that includes the liquid component and the insulator component (and any other component if present). As mentioned, the liquid component of the insulator material may evaporate during a hardening and/or drying processing (e.g., by curing, polymerization, UV irradiation, sintering, calcinating or any other suitable measure of exposing the insulator material to an energy input) for obtaining an insulation coating. Therefore, a thickness (i.e., a dry thickness) of the insulator material that remains (remaining insulator material, or insulation coating as described herein) may substantially correspond to the content of the insulator component. Herein, a change of volume, such as a compression or an expansion, of the insulator component that may occur due to the hardening and/or drying process may be either taken into account or may be negligible.

Therefore, with the content of the insulator component being known, the dry thickness of an insulation coating may be derivable from the indicative wet thickness of the insulator material. However, depending on a material and a topology of a landing surface on which the insulator material is deposited, the formation of the insulation coating as a result of hardening and/or drying process may not be spatially uniform, i.e., the dry thickness of the insulation coating may vary locally. This may be, for example, due to the fact that the insulator material is a mixture of the liquid component and the insulator component, which in turn may be flowable and/or viscous before undergoing the hardening and/or drying process. Furthermore, the substrate and the active material deposited on the substrate may together provide a non-flat landing surface for the insulator material to be deposited upon. Thus, the insulator component may move or flow to a certain extent after deposition, and therefore may be not uniformly distributed on the deposited active material and the substrate. Hence, in the prior art, it has been considered difficult to establish a reliable relationship between the thickness of the deposited insulator material and the dry thickness of the insulation coating.

The inventor discovered that there is a particular position, at which a thickness of the deposited insulator material correlates with the dry thickness of the resulting insulation coating in a reliable manner. This particular position is referred to herein as the characteristic measurement position as described above. The thickness of the deposited insulator material at the characteristic measurement position is referred to herein as the indicative wet thickness as described above. The characteristic measurement position may (or may not) vary depending on at least one of the following parameters and characteristics, including: a thickness of the deposited active material, a topology of the deposited active material, a shape of the edge portion of the deposited active material, a topology of the insulator material deposited on the substrate and, if applicable, the deposited active material, a deposition amount of the insulator material, a width (i.e., a physical extent in the width direction) of the deposited insulator material. Alternatively or additionally, the characteristic measurement position may vary depending on at least one of: a composition of the insulator material, a composition of the active material and a composition of the substrate. Alternatively or additionally, the characteristic measurement distance may vary depending on at least one of the following parameters and characteristics: a composition of the insulator material, a content of the insulator component, the hardening and/or drying process and ambient parameters such as temperature, humidity and pressure. For the sake of the brevity of the description, any of the parameters and characteristics mentioned above may be collectively referred to as "positioning factors" herein.

The characteristic measurement position is offset from the boundary (and the edge of the deposited active material) by a characteristic measurement distance. Specifically, the characteristic measurement position may be over the substrate and/or the characteristic measurement position may be offset from the deposited active material. Alternatively, the characteristic measurement position may be over the deposited active material on the substrate. This may depend on one of more of the positioning factors mentioned above.

Since the characteristic measurement distance and thus the characteristic measurement position each may depend on one or more of the positioning factors, the characteristic measurement distance and/or the characteristic measurement position may be determined first in an empiric manner and then extrapolated. For example, a content and substance of an insulator component contained in a given insulator material may be determined or known from the preparation of the insulator material. Then, a thickness of the insulator material deposited on the substrate maybe determined at different positions relative to the boundary. Here, expressions such as "offset from the boundary" or "relative to the boundary" may indicate that the position or the thickness is determined as a function of a distance from the boundary, i.e., at different (varying) positions along the width direction. Optionally, the thickness of the deposited insulator material may be also determined at different positions along the process direction. Accordingly, the thickness of the deposited insulator material may be determined in an array of positions spanning over the edge portion of the deposited active material, the boundary and a partial area of the substrate covered with the insulator material. Afterwards, and particularly after a hardening and/or drying process and/or after evaporation of the liquid component of the insulator material, the dry thickness of the remaining insulator material may be determined at the same positions as the thickness of the deposited insulator material has been measured. The determined dry thickness of the remaining insulator material is correlated with (or compared with or mapped to) the determined thickness of the deposited insulator material at each of the different positions. This approach may reveal a particular range of a measurement distance in which a correlation between the determined thickness of the deposited insulator material and the dry thickness of the remaining insulator material is reproducible and predictable.

As mentioned, the active material may be deposited on the substrate such as to form an edge that is substantially parallel to the process direction. Hence, the determining of the thickness of the deposited insulator material as a function of a distance from the boundary may mean that the thickness is measured in different positions along the width direction perpendicular to the process direction (and the process direction and the width direction may be each perpendicular to the thickness direction in which any thickness mentioned herein is determined). Particularly, the substrate with the active material and the insulator material deposited thereon maybe conveyed in the process direction while carrying out the determining of the thickness of the deposited insulator material.

In a particular example, the battery manufacturing method may (additionally or alternatively) comprise: After depositing the active material and the insulator material and before evaporation of the liquid component of the insulator material by X % by weight, X being 0.1 to 10, determining a thickness of the insulator material on the substrate at different positions distributed along the process direction and the width direction. X may be between 0.1 and 10, or between 0.1 and 5, or between 0.1 and 2. For the sake of simplicity, a state after where the evaporation of the liquid component is X % or less by weight (that is, X wt.% or less of the liquid component has evaporated) may be referred to herein as a wet state. Herein, the deposited insulator material may refer to the insulator material deposited on the substrate while the evaporation of the insulator material is X wt.% or less, unless indicated otherwise.

In the particular example, the battery manufacturing method may (additionally or alternatively) comprise: After evaporation of the liquid component of the insulator material by at least Y % by weight, Y being 30 to 99, determining a thickness of the insulator material that remains at said different positions. Y may be between 30 and 99, or between 50 and 99, or between 75 and 99, or between 90 and 99. For the sake of simplicity, a state after where the evaporation of the liquid component exceeds Y % by weight (that is, at least Y wt.% of the liquid component has evaporated) may be referred to herein as a dry state. The insulator material that remains after the evaporation of the insulator material by Y wt.% may also be referred to herein as a remaining insulator material or an insulation coating as described.

In the particular example, the battery manufacturing method may (additionally or alternatively) comprise: Identifying (or detecting) a subset of the different positions in terms of a distance from the boundary, in which a correlation of the thickness of the insulator material before evaporation of the liquid component by X % by weight and the dry thickness of the remaining insulator material respectively at each of the different positions is reproducible. Any position in the subset of the different positions that has been identified in the above described manner may be referred to herein as the characteristic measurement position, and the respective distance from the boundary may be referred to herein as the characteristic measurement distance.

Herein, the expression reproducible may indicate that a fluctuation may be below 30%, or below 25%, or below 20%, or below 15%, or below 10% or below 5%, or below 1%. The correlation may mean that there is a reproducible numerical relationship and/or a reproducible mathematical relationship between the thickness of the deposited insulator material (i.e., before evaporation of the liquid component by X % by weight) and the dry thickness of the remaining insulator material (i.e., after evaporation of the liquid component by at least Y wt.%).

Such a reproducible numerical relationship may be used to generate a table, such as a tabular database, a data array or a lookup table stored in a data storage, in which values of the thickness of the deposited insulator material and respectively corresponding values of the dry thickness of the remaining insulator material (insulation coating) are associated to each other. As such, a particular thickness of the deposited insulator material may be entered in such a table, and a corresponding dry thickness of the remaining insulator material may be obtained.

Optionally, a fitting, such as an extrapolation and/or an interpolation, of the reproducible numerical relationship may be performed, thereby extending the numerical relationship to value ranges that are not physically determined.

Alternatively or additionally, a regression analysis may be carried out to find an continuous (and universal) mathematical relationship between the thicknesses of the deposited insulator material and the remaining insulator material. As such, the mathematical relationship may include an analytical equation with the thickness of the deposited insulator material as a variable and the dry thickness of the remaining insulation coating as a function value at the variable. One such mathematical relationship may be a linear function. Alternatively or additionally, the mathematical relationship may be or include one or more of mathematical function classes, including logarithmic, exponential, polynomial or trigonometric functions. Such a mathematical relationship may allow for automatically calculating the dry thickness of the (resulting) insulation coating in a reliable manner from the determined thickness of the deposited insulator material.

In some examples, there may be a mathematical relationship between the indicative wet thickness of the deposited insulator material and a dry thickness of a remaining insulation coating. The mathematical relationship may be given by a linear equation as follows:

$$ t = S \cdot d + C $$

In the above equation, t is the dry thickness of the insulation coating (i.e., in the dry state); S is a characteristic slope; d is the indicative wet thickness; and C is an offset. The parameters S and C may be determined empirically, by a calibration process as described herein, from a fitting and/or from a regression analysis as described above. Herein, the calibration process may refer to a process of finding the characteristic measurement position by means of the characteristic measurement distance from the boundary, and thus the position for determining the indicative wet thickness of the deposited insulator material.

The above equation may allow for estimating the thickness t of the remaining insulation coating in a manner of an interpolation and/or extrapolation. The indicative wet thickness d and the dry thickness t may have the same unit, for example μm or mm.

For example, the slope S may be between 0.01 and 0.6, or between 0.02 and 0.5, or between 0.03 and 0.4, or between 0.04 and 0.35. For example, the offset C may be between -100 μm and + 100 μm, or between -90 μm and +50 μm, or between -80 μm and +30 μm, or between -50 μm and +10 μm. In some particular examples, the slope S and/or the offset C may depend on the content (i.e., a weight or volume percentage) of the insulator component in the insulator material. Additionally or alternatively, the slope S and/or the offset C may be independent of the composition (i.e., chemical substance(s)) of the insulator component in the insulator material.

The particular example as mentioned above may also be considered (referred to) as a calibration process of a real-time determination of the dry thickness of the insulation coating. For example, after the calibration in the above-described manner, the thickness of the deposited insulator material may be monitored in real-time.

Accordingly, the battery manufacturing method and system as disclosed herein may allow for predicting a dry thickness of an insulation coating from a real-time determination of the indicative wet thickness of the deposited insulator material in a reliable manner. Hence, the quality of a battery product, in terms of a precise positioning and deposition of the insulation coating, may be increased. At the same time, material, cost, time and energy requirements may be decreased.

The battery manufacturing method may comprise adapting the depositing of the insulator material as a function of the indicative wet thickness. As described above, the indicative wet thickness of the deposited insulator material may be used to predict a dry thickness of the resulting insulation coating (remaining insulator material). Hence, the indicative wet thickness may be exploited to optimize and/or control the deposition of the insulator material.

For example, there may be a target dry thickness of the insulation coating for a given battery product. This target thickness may correspond to a target range of the indicative wet thickness according to the numerical or mathematical relationship as described above. Upon determining the indicative wet thickness, the indicative wet thickness may be used to predict the dry thickness of the insulation coating in the above-described manner. If the indicative wet thickness is outside of the target range, the deposition of the insulator material may be adapted in terms of a deposition position or a deposition speed such as to shift the indicative wet thickness towards the target range. As mentioned, the indicative wet thickness being within the target range may result in the dry thickness of the insulation coating, after evaporation and hardening and/or drying process if applicable, being, or being sufficiently close to, the target dry thickness.

For example, the deposition position may be adapted by moving an aforementioned ejector of the insulator material in any of the width direction, the process direction and the thickness direction. Here, the moving the ejector maybe in either of positive and negative directions of the width direction, the process direction and the thickness direction. For the sake of simplicity, movement directions in the width direction may be referred to a left direction and a right direction (e.g., in a plan view, depending on the viewing direction); movement directions in the process direction may be referred to a forward direction and a backward direction (with the forward direction being a positive direction in terms of the process direction, and the backward direction being opposite thereto); and movement directions in the thickness direction may be referred to an upward direction (closer to the substrate) and a downward direction (away from the substrate).

The insulator material maybe a mixture of a flowable/viscous insulator component and a liquid component. Further, a landing surface on which the insulator material is deposited may not be flat. Hence, the deposition of the insulator material, particularly through an ejector, may lead to a spatially nonuniform distribution of thickness of the deposited insulator material. In particular, the thickness of the deposited insulator material may exhibit a local maximum. Thus, the deposition, particularly the deposition position, may be adapted such as to also compensate such effects. For example, the deposited insulator material may exhibit a local maximum at a position aligned to a center of the ejector of the insulator material. If the indicative wet thickness is below the target range, the deposition position, i.e., the ejector, may be moved such that said local maximum comes closer to the characteristic measurement position. Similarly, if the indicative wet thickness is above the target range, the deposition position, i.e., the ejector, may be moved such that said local maximum moves away from the characteristic measurement position.

For the adapting of the deposition of the insulator material, the deposition speed may be increased or decreased. For example, if the indicative wet thickness is below the target range, the deposition speed maybe increased. If the indicative wet thickness is above the target range, the deposition speed may be decreased.

The adapting of the deposition, particularly the deposition speed and/or the deposition position, may be performed via a feedback loop using the indicative wet thickness as an input and outputs the deposition speed and/or the deposition position of the insulator material. The circuitry and algorithm behind such a feedback loops may be as known in the art.

In some examples, the insulator material may be configured such that, when depositing the insulator material, a ratio of a content of the liquid component to a content of the insulator component is 1 to 100, particularly 2 to 50, and more particularly 4 to 25, or 5 to 20. If the content ratio is within one of these ranges, a balance may be given between a sufficient insulation and the requirements to cost, energy consumption and time of the battery manufacturing method and system.

In some examples, the thickness of the insulator material (and/or the liquid component thereof) deposited on the substrate may be between 10 $\mu$m and 1000 $\mu$m, particularly between 20 $\mu$m and 500 $\mu$m, and more particularly between 50 $\mu$m and 250 $\mu$m. An optimized value that takes into account an increased throughput and efficiency of the battery manufacturing method and system as well as decreased material, time and energy requirements may be within one of these ranges.

In some examples, the battery manufacturing method may further comprise: exposing the (deposited) insulator material to an energy input such as to evaporate the liquid component of the insulator material. Particularly, the energy input may be or include heat and/or irradiation, particularly UV irradiation. Additionally or alternatively, the exposing to the energy input may include exposing the insulator material to an environment (e.g., in which a temperature, a pressure and/or a humidity are adapted to evaporate the liquid component) such as for the liquid component of the insulator material to evaporate, while the insulator component remains. This method step may be referred to as a hardening and/or drying process as described above. During the hardening and/or drying process, the content of the liquid component in the deposited insulator material may decrease to Y % by weight, whereby Y may be between 30 and 99, or between 50 and 99, or between 75 and 99, or between 90 and 99 as discussed above. As a result, an insulation coating may be obtained.

In some examples, after the exposing the insulator material to the energy input, a thickness of a remaining insulator material (and/or the insulator component) is between 0.1 $\mu$m and 40 $\mu$m, particularly between 1 $\mu$m and 20 $\mu$m, and more particularly between 2 $\mu$m and 10 $\mu$m. This thickness may be referred to as a dry thickness as described above.

In some examples, the determining of the thickness of the insulator material may be performed before the liquid component of the insulator material evaporates by X % with reference to a mass of the insulator material deposited. X may be as described above. In particular, X may be between 0.1 and 10, or between 0.1 and 5, or between 0.1 and 2. For each of these ranges, the lower boundary for X may be 0.01, 0.05, 0.2, 0.5 or 1 instead of 0.1.

In some examples, the depositing of the insulator material maybe performed using an ejector positioned over the substrate. The adapting of the depositing of the insulator material as a function of the indicative wet thickness may comprise repositioning the ejector. The ejector may be as described above and may include any of the corresponding features described herein. The repositioning of the ejector may be as describe above, for example in at least one of the thickness direction, the width direction and the process direction.

In some examples, the adapting of the depositing of the insulator material as a function of the indicative wet thickness may comprise increasing and/or decreasing a deposition speed of the insulator material. The deposition speed may be controlled in the manner as described above. The adapting, particularly increasing and/or decreasing of, the deposition speed may include any of the corresponding features described herein.

In some examples, after depositing the active material, the active material may form an edge portion on the substrate. The edge portion extends to the boundary and has a concave top surface opposite to the substrate. After deposition, the active material may have a bulk portion with a top surface that is substantially parallel to a top surface of the substrate on which the active material is deposited. The active material may further have the edge portion that is formed by not entirely covering (the top surface of) the substrate as described above. As such, the edge portion may be formed along (i.e., parallel to and in a vicinity of) the boundary as described above. As mentioned, the edge portion may form a so-called sliding, in which the thickness of active material smoothly decreases with a round top surface, rather than forming a sharp perpendicular surface to the substrate. The formation and shape of the edge portion of the active material may be due to viscous and/or flowable properties of the active material. Additionally or alternatively, the formation and shape of the edge portion of the active material may be due to a respective deposition process.

In some examples, after depositing the insulator material, the insulator material may cover at least a part of the edge portion of the active material and may extend beyond the edge portion onto the substrate. As such, the insulator material may be deposited such as to extend on at least part of the edge portion of the active material, the boundary and a part of the substrate at the boundary.

In some examples, the substrate, particularly a top surface thereof on which the active material is deposited, may be arranged in a plane perpendicular to the thickness direction. The active material may be deposited such that the boundary is formed along the process direction perpendicular to the thickness direction as described above.

In some examples, the insulator material may be deposited in a stripe shape over the boundary, the stripe shape being elongated along the process direction. The stripe shape may refer to a plan view, i.e., parallel to the thickness direction (i.e., parallel to a top surface of the substrate; parallel to the width direction and the process direction). Particularly, the stripe shape may be a shape elongated in the process direction with a substantially constant width (in the width direction). As such, the boundary may be covered in a uniform manner by the insulation coating.

In some examples, the characteristic measurement distance may be between 0.1 mm and 10 mm, particularly between 0.1 mm and 6 mm, and more particularly between 0.5 mm and 3 mm. In further examples, the characteristic measurement distance may be at least 0.1 mm and up to 2.5 mm, or up to 2 mm, or up to 1.8 mm, or up to 1.6 mm. The characteristic measurement distance may be determined in the manner described above. As mentioned, the position distanced from the boundary by the characteristic measurement distance may be referred to as the characteristic measurement position. The thickness of the insulator material determined at the characteristic measurement position may be referred to as the indicative wet thickness. As mentioned, the characteristic measurement distance and the characteristic measurement position maybe determined once for a given insulator material.

In some examples, the characteristic measurement position may remain unchanged if a different insulator material is used, for example by altering the contents of the components in the insulator material, and particularly the content of the insulator component. Accordingly, even if the contents of the components of the insulator material are changed, a same characteristic measurement position may be used for determining the indicative wet thickness. Also, the same numerical and/or mathematical relation as discussed above (e.g., by linear regression, by an interpolation and/or extrapolation, etc.) may be used to estimate the dry thickness of the insulation coating.

Similarly, the characteristic measurement position may remain unchanged even if the composition of the insulator material, and particularly the substance of the insulator component, is changed. Accordingly, even if a different material is used as the insulator component, a same characteristic measurement position may be used for determining the indicative wet thickness. Also, the same numerical and/or mathematical relation as discussed above (e.g., by linear regression, by an interpolation and/or extrapolation, etc.) may be used to estimate the dry thickness of the insulation coating.

In some examples, the method steps of depositing the active material, depositing the insulator material, determining the indicative wet thickness and adapting the depositing of the insulator material may be performed in a continuous manner while the substrate is moved in the process direction. As such, the battery manufacturing method and system may be used in a production line. A throughput and efficiency of battery manufacturing may be increased in this manner.

The process direction and the thickness direction may be as defined herein. Particularly, the process direction, the thickness direction and the width direction may be perpendicular to one another.

According to an aspect, a battery manufacturing system (that is, a manufacturing system of a battery) is provided. As mentioned, the battery manufacturing system may be configured to manufacture a battery, particularly a secondary battery. The battery manufacturing system may comprise an active material deposition unit, an insulator material deposition unit, a measurement unit and a control unit.

As mentioned, the battery manufacturing system and the battery manufacturing method disclosed herein may be linked. Particularly, the battery manufacturing system may be configured to carry out the battery manufacturing method as disclosed herein. Furthermore, the battery manufacturing system and the battery manufacturing method may be interdependent, such that the battery manufacturing system may be configured to carry out any specific one or combination of the features of the battery manufacturing method as described herein.

The active material deposition unit may be configured to deposit an active material. The active material deposition unit may include an ejector as described above. The active material deposition unit may include a plurality of ejectors each configured to deposit a same active material or at least two different active materials.

The insulator material deposition unit may be configured to deposit an insulator material. The insulator material deposition unit may include an ejector as described above. The insulator material deposition unit may include a plurality of ejectors each configured to deposit the insulator material. Particularly, the insulator material deposition unit, or a part thereof, may be movable such as to change a deposition position (as described above) of the insulator material relative to the substrate and/or to the active material deposited on the substrate. Additionally or alternatively, the insulator material deposition unit may be controllable such as to change a deposition speed (as described above) of the insulator material. The changing process of the deposition position and/or the deposition speed may correspond to the adapting of the depositing of the insulator material of the battery manufacturing method as described herein.

The measurement unit may be configured to determine an indicative wet thickness of the insulator material at a characteristic measurement position. The measurement unit may be configured to carry out the determining of the indicative wet thickness as described herein with respect to the battery manufacturing method. The indicative wet thickness may include any of the corresponding features described herein.

In particular, the measurement unit is may physically determine (i.e., measure) the indicative wet thickness. The measurement unit may include an optical measurement setup, particularly a reflectance spectrometer as described above. The reflectance spectrometer may employ a light source with a spectrum, for example in an (near) infrared near range and/or a visible range, or in a wavelength range of 400 nm to 1100 nm. The reflectance spectrometer may irradiate a measured area, for example with a spot size of 2 mm or less, particularly with a spot size of 1 mm to 1.5 mm. In one example, a portion of light from the light source is reflected at an incident surface of a target material (that is, the deposited insulator material, the remaining deposited material and/or the active material), while another portion of light is reflected on an interface of the target material with the substrate (as also recited herein). Accordingly, a phase shift between the different reflected portions of the light maybe detected, and the thickness, particularly the indicative wet thickness, may be derived therefrom.

The control unit may be configured to control the insulator material depositing unit as a function of the indicative wet thickness of the insulator material. The control unit may be configured to adapt the depositing of the insulator material as a function of the indicative wet thickness in the above described manner. The control unit may be provided as one physical unit. Additionally or alternatively, the control unit may be provided as a distributed system.

The control unit may include a processor to execute machine-readable instructions. The control unit may include a memory to (temporarily) store instructions and data. In particular, the steps, processes, parameters and variables according to the battery manufacturing method as disclosed herein maybe provided as machine-readable instructions and data. The memory of the control unit may (temporarily) store at least part of such instructions and data. The processor of the control unit may be configured to process, execute and/or generate such instructions and data.

Furthermore, the memory of the control unit may be configured to store a specific relationship between the indicative wet thickness and the dry thickness of the insulation coating. Particularly, the memory may be configured to store the numerical and/or mathematical relationship between the indicative wet thickness and the dry thickness of the insulation coating. The numerical and/or mathematical relationship may be as described above.

The control unit may be configured to receive the indicative wet thickness from the measurement unit. In particular examples, the control unit may be configured to generate a machine-readable data set including the indicative wet thickness as a function of time. For this purpose, the measurement unit and/or the control unit may be capable of providing a time stamp to each measurement result of the indicative wet thickness. The control unit may be configured to execute the instruction of storing the indicative wet thickness in the memory.

The control unit may be configured to adapt the deposition, particularly the deposition speed and/or the deposition position, as a function of the indicative wet thickness in the manner described above. Particularly, the control unit maybe configured to maintain or change the deposition position of the insulator material as a function of the indicative wet thickness. Alternatively or additionally, the control unit may be configured to maintain, increase or decrease the deposition speed of the insulator material. In this respect, a feedback loop may be used in the above-described manner.

Additionally or alternatively, the control unit may be further configured to execute any of the method steps disclosed herein. The control unit may be further configured to implement any of the features of the battery manufacturing method disclosed herein.

According to a further aspect, a battery is provided. The battery may be manufactured by the battery manufacturing method as disclosed herein that may include any of the corresponding features described herein. Additionally or alternatively, the battery may be manufactured by the battery manufacturing system as disclosed herein that may include any of the corresponding features described herein. The battery may be or include a secondary battery. However, the claimed subject matter is not limited to a secondary battery, but may be or include a primary battery or any other type of energy storage unit. In a specific example, the battery is configured to be used in a mobile device, such as a smart phone or a mobile computer. In other specific examples, the battery is configured to power an electric vehicle.

In some examples, the battery may comprise an insulation coating covering the substrate and the active material deposited on the substrate and the boundary therebetween. The insulation coating may include any of the corresponding features described herein. Particularly, the insulation coating may have a thickness of 0.1 $\mu$m to 40 $\mu$m, particularly between 1 $\mu$m and 20 $\mu$m, and more particularly between 2 $\mu$m and 10 $\mu$m.

Such a battery, produced by the battery manufacturing method disclosed herein and/or using the battery manufacturing system disclosed herein, may incorporate an insulation coating that is accurately formed over the boundary between a substrate and an active material deposited on the substrate. Accordingly, the safety of the battery may be increased. Furthermore, the overall cost for manufacturing such a battery may be decreased, because the need for energy, time and material may be reduced when producing a battery according to the battery manufacturing method and/or using the battery manufacturing system disclosed herein.

BRIEF DESCRIPTION OF DRAWINGS

The accompanying drawings illustrate some particular examples and are intended to help understanding the present invention. Herein and in the drawings, a same reference sign or a series of reference signs may be used in different examples to indicate a same, similar or analogical element.

It is noted that the features shown in the drawings may not be true to scale. Particularly, some features may be illustrated in an enlarged or size-reduced manner such as to emphasize the technical concept and the working principle of the claimed subject matter rather than providing a layout or a template for constructing a battery manufacturing system.

FIG. 1 shows a flow diagram of a battery manufacturing method according to an example.

FIG. 2 shows a schematic depiction of a battery manufacturing system according to an example.

FIG. 3 shows a schematic plan view of a battery manufacturing process according to an example.

FIG. 4 shows a schematic plan view of a battery manufacturing system according to an example.

FIG. 5 shows a schematic cross-sectional view of a battery manufacturing system according to an example.

FIG. 6 shows a schematic explosive view of a part of a battery manufacturing system according to an example.

FIG. 7A and 7B show a schematic side view and a schematic front view, respectively, of a measurement unit according to an example.

FIG. 8A and 8B show a schematic plan view and a schematic cross-sectional side view, respectively, of a calibration process according to examples.

FIG. 9 shows a schematic cross-sectional view of a part of a battery manufacturing system according to an example.

DETAILED DESCRIPTION

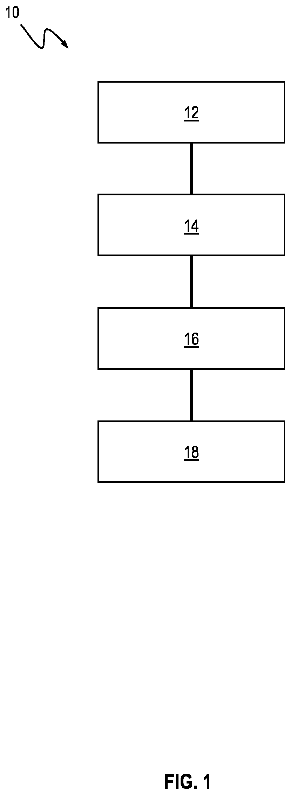

FIG. 1 shows a flow diagram of a battery manufacturing method 10. The battery manufacturing method may also be referred to as a method of manufacturing a battery described herein, wherein the battery may be or include a secondary battery as mentioned. The battery manufacturing method 10 as shown in FIG. 1 may be used to manufacture a battery according to the independent product claim. Furthermore, the battery manufacturing method 10 as shown in FIG. 1 may be carried out by the battery manufacturing system or its examples described herein.

The battery manufacturing method 10 comprises method step 12, 14, 16 and 18, which are each depicted as a block in FIG. 1. The battery manufacturing method 10 comprises, at block 12, depositing an active material on a substrate. At block 14, the method 10 comprises depositing an insulator material on the substrate such as to extend over a boundary between the active material and the substrate, wherein the insulator material includes an insulator component and a liquid component. At block 16, the battery manufacturing method 10 comprises determining a indicative wet thickness of the insulator material at a position on the substrate that is offset from the boundary by a characteristic measurement distance. At block 18, the battery manufacturing method 10 comprises adapting the depositing of the insulator material as a function of the indicative wet thickness.

As such, the battery manufacturing method 10 may be as described above. Furthermore, the battery manufacturing method 10 as shown in FIG. 1 may additionally include any of the features of the battery manufacturing method as disclosed herein.

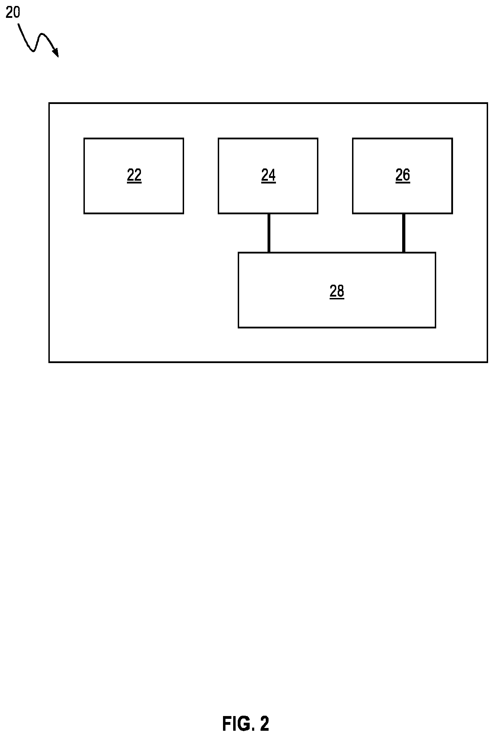

FIG. 2 schematically shows a battery manufacturing system 20 according to an example. The battery manufacturing system 20 comprises an active material deposition unit 22, an insulator material deposition unit 24, a measurement unit 26 and a control unit 28. The battery manufacturing system 20 may include any of the corresponding features described herein. In particular, the battery manufacturing system 20 may be configured to carry out the battery manufacturing method disclosed herein, optionally including any one or subset of the features of the battery manufacturing method described herein.

The active material deposition unit 22 may be configured to deposit an active material on a substrate. The active material deposition unit 22 may include any of the corresponding features described herein. Particularly, the active material deposition unit 22 may be configured to implement any of the features regarding the deposition of the active material on the substrate as disclosed herein. The active material may include any of the corresponding features described herein. Particularly, the active material maybe prepared for forming an electrode, for example a positive electrode, of a secondary battery.

The insulator material depositing unit 24 maybe configured to deposit an insulator material on the substrate and the active material deposited on the substrate. The insulator material depositing unit 24 may include any of the corresponding features described herein. Particularly, the insulator material deposition unit 24 may be configured to implement any of the features regarding the deposition of the insulator material on the substrate as disclosed herein. The insulator material deposition unit 24 may be configured to deposit the insulator material on the substrate, on the active material deposited on the substrate and on the boundary therebetween.

The insulator material may include any of the corresponding features described herein. Particularly, the insulator material may include a liquid component and an insulator component. Generally, the insulator component may be as described above. Particularly, the insulator component of the insulator material may be or contain a polymer-based insulator component such as a polyvinylidene fluoride (PVDF) and/or a ceramic-based insulator component such as alumina ($Al_2O_3$).

The measurement unit 26 may be configured to determine an indicative wet thickness of the insulator material deposited on the substrate at a characteristic measurement position. The measurement unit 26 may include any of the corresponding features described herein. The indicative wet thickness and the characteristic measurement position may be as described above.

The control unit 28 may be configured to control the insulator material depositing unit 24 as a function of the indicative wet thickness of the insulator material. The control unit 28 may include any of the corresponding features described herein. The deposition of the insulator material as a function of the indicative wet thickness may be carried out as described above. Particularly, the control unit 28 may be coupled to the measurement unit 26 in terms of a signal transfer, in order to receive the determined indicative wet thickness. The control unit 28 may be further coupled to the insulator material deposition unit 24 in terms of a signal transfer so as to control the insulator material deposition unit 24 as a function of the indicative wet thickness, in particular by maintaining or changing the deposition position and/or the deposition speed in the above-described manner.

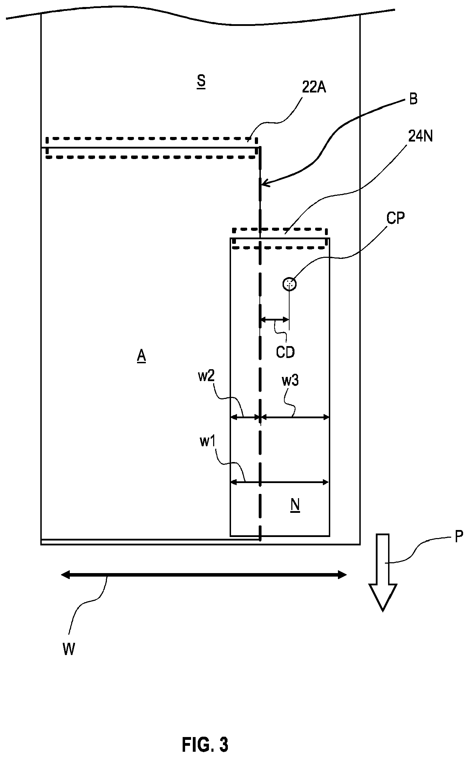

FIG. 3 schematically shows a plan view of a battery manufacturing process. The depiction shown in FIG. 3 may be an intermediate state during execution of the battery manufacturing method disclosed herein and/or during operation of the battery manufacturing system disclosed herein. Again, it is noted that the depictions in the drawings are not true to scale.

A substrate S is moved, continuously or intermittently, in a process direction P. The substrate may include any of the corresponding features described herein. Particularly, the substrate may be or contain aluminum metal to provide a current collector for a positive electrode of a secondary battery.

An active material A is deposited on the substrate S in an active material deposition position 22A. The active material A may include any of the corresponding features described herein. Particularly, the active material A may be an active material, for example containing lithium, for forming a positive electrode of a secondary battery. The active material A may contain an insulator component and a liquid component, wherein each of which may include any of the corresponding features described herein. As mentioned, a (major) surface of the substrate S on which the active material A is deposited may be referred to as a top surface of the substrate S.

As shown in FIG. 3, the active material A is deposited on (the top surface of) the substrate such as to cover a partial width (a partial area) of the substrate in terms of a width direction W that is perpendicular to the process direction P. In other words, the active material A is deposited such as not to extend across an entire width of the substrate S, thus leaving a portion of the substrate S uncovered. In FIG. 3, a right-hand side part of the substrate S is not covered with the active material A.

Accordingly, a boundary B is formed along an edge of the deposited active material A. In other words, the deposited active material A extends to the edge in the width direction W, and this edge forms the boundary B between the deposited active material A and the substrate S. The boundary B may be provided as described above, and include any of the corresponding features described herein.

An insulator material N is deposited on (the top surface of) the substrate S and over the boundary B at an insulator material deposition position 24N downstream of the active material deposition position 22A with respect to the process direction P. The insulator material N is also deposited on a part of the deposited active material A along the boundary B. In other words, the deposited insulator material N also extends onto the deposited active material A. The insulator material N and its deposition may each include any of the corresponding features described herein.

The substrate S may be arrested in position during the deposition of an active material A and/or an insulator material N on the substrate S. Alternatively, the substrate S may be continuously moved in the process direction P, while the deposition of the active material A and the insulator material N is also executed in a continuous manner.

As shown in FIG. 3, a width w1 indicates a dimension of the deposited insulator material N (and thus a width w1 of the insulation coating) in the width direction W. For example, the width w1 may be 1 mm to 20 mm, or 1.5 mm to 15 mm, or 1.8 mm to 10 mm, or 2 mm to 8 mm, or 2.5 mm to 7 mm, or more specifically 3 mm to 6 mm.

As further shown in FIG. 3, a width w2 indicates a dimension of an overlapping area (in a plan view perpendicular to the width direction W and the process direction P; also referred to as an overlay) of the deposited active material A and the insulator material N in the width direction W. For example, the width w2 may be 0.01 mm to 5 mm, or 0.02 to 4 mm, or 0.03 to 3 mm, or 0.04 to 2 mm, or more specifically 0.05 to 1.5 mm.

As further shown in FIG. 3, a width w3 indicates a dimension of the insulator material N directly covering (i.e., without the deposited active material therebetween) the substrate S. For example, the width w3 may be 0.5 mm to 20 mm, or 1.5 mm to 15 mm, or 1.8 mm to 10 mm, or 2 mm to 8 mm, or 2.2 mm to 7 mm, or more specifically 2.5 mm to 6 mm.

As further shown in FIG. 3, a thickness of the deposited insulator material is determined at a characteristic measurement position CP. The characteristic measurement position CP is offset from the boundary B by a characteristic measurement distance CD. Each of the characteristic measurement position CP and the characteristic measurement distance CD may be determined as described above, and may include any of the corresponding features described herein.

Particularly, the thickness of the deposited insulator material N determined at the characteristic measurement position CP may be referred to as the indicative wet thickness as described above. From the determined indicative wet thickness, a dry thickness of a resulting insulation coating may be estimated in the manner described above. The indicative wet thickness may be provided as described above, and may include any of the corresponding features described herein.

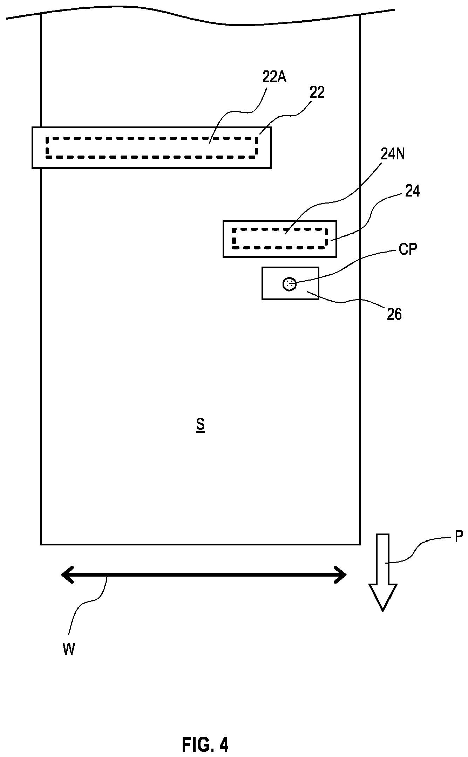

FIG. 4 schematically shows a plan view of a battery manufacturing system according to an example, which may correspond to, or be part of, the example shown in FIG. 2. The battery manufacturing system shown in FIG. 4 may include any of the features described herein with respect to a battery manufacturing system. In particular, the battery manufacturing system of FIG. 4 may be configured to carry out the battery manufacturing method disclosed herein, optionally including any one or subset of the features of the battery manufacturing method described herein. Furthermore, the battery manufacturing system of FIG. 4 may correspond to the battery manufacturing process shown in FIG. 3.

The battery manufacturing system in FIG. 4 comprises an active material deposition unit 22 aligned to an active material deposition position 22A described above. Further, the battery manufacturing system in FIG. 4 comprises an insulator material deposition unit 24 aligned to an insulator material deposition position 24N described above. Each of the active material deposition unit 22 and the insulator material deposition unit 24 may include any of the corresponding features described herein. In particular, the insulator material deposition unit 24 may be movable in the process direction (e.g., in a forward direction and a backward direction as described above) and/or in the width direction (e.g., in a left direction and a left direction in the orientation as depicted in FIG. 4). In this manner, a deposition position of the insulator may be changed as a function of the indicative wet thickness as described above.

The battery manufacturing system in FIG. 4 further comprises a measurement unit 26. The measurement unit 26 is aligned to the characteristic measurement position CP. The measurement unit 26 may include any of the corresponding features described herein. In particular, the measurement unit 26 maybe adjustable in the width direction, for example for a calibration process as described above.

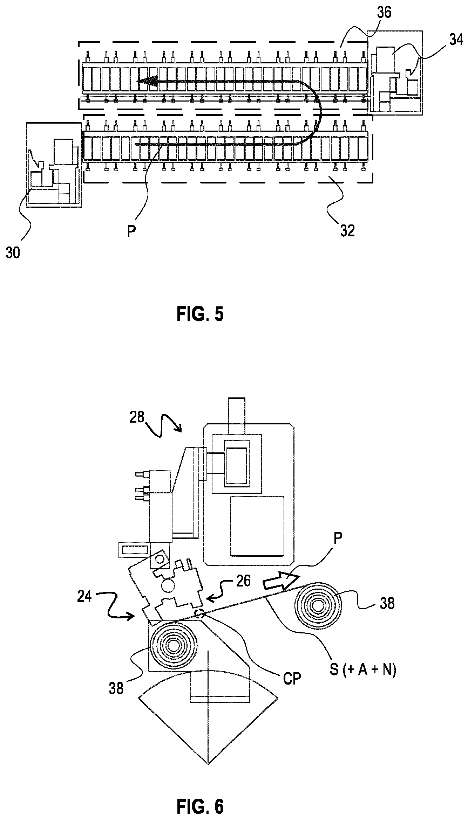

FIG. 5 schematically shows a cross-sectional view of a battery manufacturing system according to an example, which may correspond to, or be part of, any of the examples shown in FIG. 2 and 4. The battery manufacturing system shown in FIG. 5 may include any of the features described herein with respect to a battery manufacturing system. In particular, the battery manufacturing system of FIG. 5 may be configured to carry out the battery manufacturing method disclosed herein, optionally including any one or subset of the features of the battery manufacturing method described herein. Furthermore, the battery manufacturing system of FIG. 5 may correspond to the battery manufacturing process shown in FIG. 3.

The battery manufacturing system in FIG. 5 comprises a first coating unit 30, a first drying unit 32, a second coating unit 34 and a second drying unit 36. A substrate (not explicitly shown in FIG. 5) is supplied to the first coating unit 30. In the first coating unit 30, an active material and an insulator material are deposited, in that order, on the substrate in the manner described herein. The first coating unit 30 may comprise the active material deposition unit, the insulator material deposition unit and the measurement unit described above. The battery manufacturing system may comprise the control unit as described above to control the active material deposition unit, the insulator material deposition unit and the measurement unit in the above-described manner.

Then the substrate carrying the deposited active material and the deposited insulator material is conveyed through the first drying unit 32 in the process direction P, and exposed to a hardening and/or drying process as described above. Particularly, the substrate carrying the deposited active material and the deposited insulator material may be exposed to an energy input in the first drying unit 32.

After passing the first drying unit 32, optionally, the substrate may be turned around (flipped over) and supplied to the second coating unit 34. In the second coating unit 34, a back surface of the substrate may be coated with another active material and another insulator material, in that order. The back surface may be a surface of the substrate opposite to the top surface thereof. The other active material may be the same as the active material described above, or may be or contain a different active material. The other insulator material may be the same as the insulator material described above, or may be or contain a different insulator material. The other active material may be deposited on (the back surface of) the substrate in a corresponding manner as the active material and as described above. The other insulator material may be deposited on (the back surface of) the substrate and the deposited other active material in a corresponding manner as the insulator material and as described above.

Afterwards, the substrate, which is coated on both the top surface and the back surface, may be conveyed through the second drying unit 36 in which the other active material and the other insulator material deposited on the back surface of the substrate are exposed to a hardening and/or drying process as described above. In particular, the substrate carrying the other active material and the other insulator material on the back surface may be exposed to an energy input in the above-described manner.

In an alternative example of the battery manufacturing system that is not explicitly shown, the battery manufacturing system may comprise one coating unit, for example the first coating unit 30, and one drying unit, for example the drying unit 32.

FIG. 6 shows a schematic explosive view of a part of a battery manufacturing system according to an example. In particular, the battery manufacturing system shown in FIG. 6 may correspond to, or be part of, any of the examples shown in FIG. 2, 4 and 5. The battery manufacturing system shown in FIG. 6 may include any of the features described herein with respect to a battery manufacturing system. In particular, the battery manufacturing system of FIG. 6 may be configured to carry out the battery manufacturing method disclosed herein, optionally including any one or subset of the features of the battery manufacturing method described herein. Furthermore, the battery manufacturing system of FIG. 6 may be implemented in either or both of the first coating unit 30 and the second coating unit 34 described above with reference to FIG. 5.

In FIG. 6, the substrate S (that may be carrying a deposited active material A and a deposited insulator material N) is moved in the process direction P using a set of conveyer rollers 38. As shown in FIG. 6, the measurement unit 26 is arranged immediately downstream of the insulator material deposition unit 24 with respect to the process direction P. Specifically, the measurement unit 26 is aligned to the characteristic measurement position CP in FIG. 6. Furthermore, the insulator material deposition unit 24 and the measurement unit 26 are coupled to the control unit 28 such as to allow a signal transfer. Each of the insulator material deposition unit 24, the measurement unit 26 and the control unit 28 may include any of the corresponding features described herein.

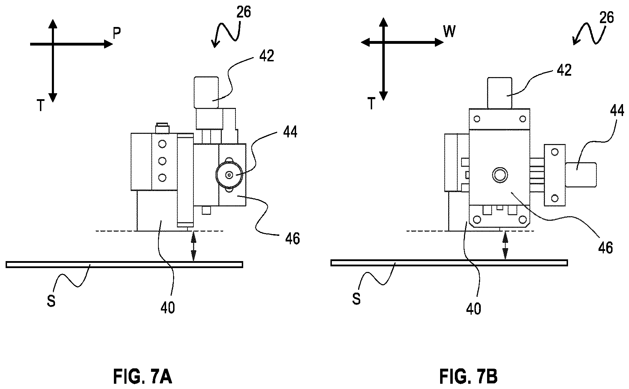

FIG. 7A and 7B schematically show a side view and a front view, respectively, of a measurement unit 26 according to an example. The measurement unit 26 shown in FIG. 7A and 7B may be implemented in the battery manufacturing system as disclosed herein, particularly in any of the examples of the battery manufacturing system described above with reference to FIG. 2, 4, 5 and 6. Furthermore, the measurement unit shown in FIG. 7A and 7B may be used to carry out (a corresponding part of) the battery manufacturing method disclosed herein. The measurement unit 26 shown in FIG. 7A and 7B may include any of the corresponding features described herein.

The measurement device 26 in FIG. 7A and 7B comprises a light projector 40, a height adjustment screw 42, a width position adjustment screw 44 and a fixation plate 46. The light projector 40 may comprise, or be connected to (via a waveguide or optical fiber), a light source (not shown). Optionally, the light projector 40 may comprise a collimator or a lens system to focus the light from the light source onto a target plane. The measurement device may function in a manner of a reflectance spectrometer as described above. Optionally, the measurement device may further comprise an electrically driven shutter for the reflectance spectrometry.

The fixation plate 46 may be used to fix the measurement device 26 in an immovable manner except for the height and width direction adjustments via the respective screws 42, 44. In particular, the fixation plate 46 may fix the measurement unit 26 to an insulator material deposition unit of the battery manufacturing system. In this manner, a relative position of the measurement unit 26 and the insulator material deposition unit may be fixed.

The height adjustment screw 42 may be operated to adjust a height, i.e., a position in the thickness direction T, of the light projector 40. In particular, the height adjustment screw 42 may be operated to adjust a distance between the substrate S and the light projector 40. Particularly, the height screw 44 may be used for focusing the light from the light projector 40 onto a proper target plane, which may be on different height levels due to a curvature of the deposited active material and the deposited insulator material in the above-described manner.

The width direction adjustment screw 44 may be operated to adjust a position of the light projector 40 in the width direction W. Accordingly, the width direction adjustment screw may be used to adjust the deposition position of the insulator material relative to the boundary B as described above. Particularly, the width direction screw 44 may be used for the calibration process described above.

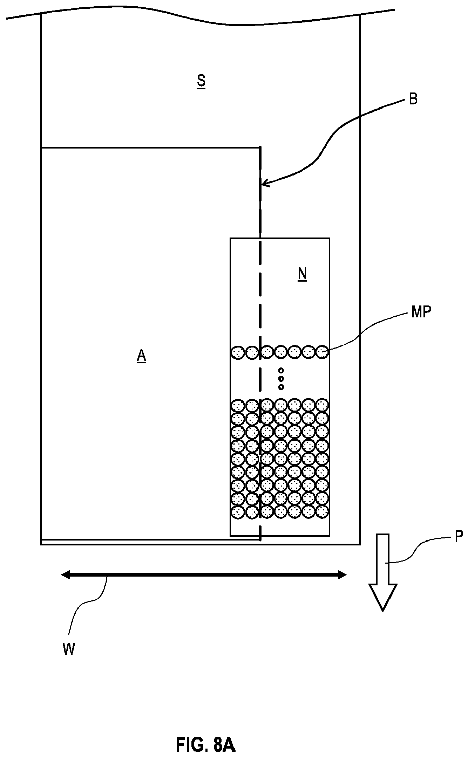

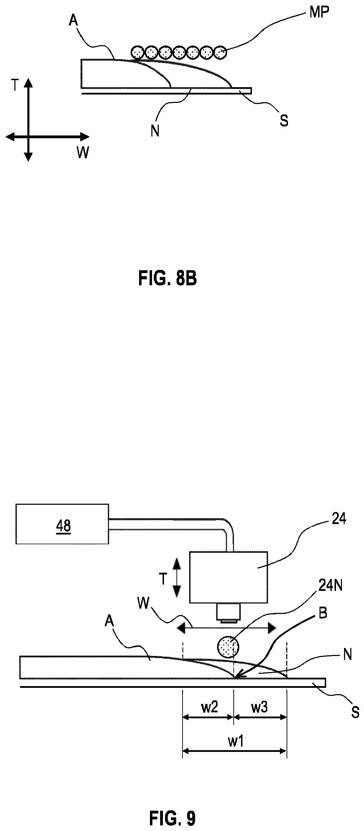

FIG. 8A and 8B show a schematic plan view and a schematic cross-sectional side view, respectively, of a calibration process according to an example. The calibration process may be performed in the above-described manner. The calibration process may include any of the corresponding features described herein.

As shown in FIG. 8A and 8B, a thickness of the deposited insulator material may be determined at different positions in the width direction W. In FIG. 8A and 8B, the different positions are labelled with measurement points MP. For the sake of simplicity, only one of the measurement points MP is labelled with a reference sign in FIG. 8A and 8B.

The measurement of thickness may be performed in a stop-and-go manner in which the substrate S is moved intermittently in the process direction and stopped for the measurements. Alternatively, the measurement of thickness may be performed in a continuous manner with a series of measurement at each of the measurement positions MP along the width direction W, thereby obtaining a thickness data set as a function of the position in the width direction W. Hence, the depiction of an array of the measurement points MP in FIG. 8A and 8B is for demonstrating that the thickness of the deposited insulator material may be measured at any point within the deposited area. It is noted that the thickness measurements at the measurement points MP may be performed before the insulator material evaporates by at least X wt.%, wherein X may be as described above.

As described above, the characteristic measurement position and characteristic measurement distance, and therefore a position to determine the indicative wet thickness may be derivable from the calibration process in which the thickness of the deposited insulator material is determined at different measurement points MP and examined for a correlativity with the dry thickness of the resulting insulation coating. From this a reproducible numerical and/or mathematical relationship between the indicative wet thickness and the dry thickness may be obtained. On this basis, the technical effects as described above may be achieved.

FIG. 9 shows a schematic cross-sectional view of a part of a battery manufacturing system according to an example. The battery manufacturing system shown in FIG 9 may correspond to, or be part of, any of the examples shown in FIG. 2, 4 and 5. The battery manufacturing system shown in FIG. 9 may include any of the features described herein with respect to a battery manufacturing system. In particular, the battery manufacturing system of FIG. 9 may be configured to carry out the battery manufacturing method disclosed herein, optionally including any one or subset of the features of the battery manufacturing method described herein. Furthermore, the battery manufacturing system of FIG. 9 may be implemented in either or both of the first coating unit 30 and the second coating unit 34 described above with reference to FIG. 5.

FIG. 9 particularly shows an insulator material deposition unit 24 aligned to the insulator material deposition position 24N. The insulator material deposition unit 24 is further fluidly connected with a insulator material supply 48. The insulator material deposition unit 24 may be movable in the width direction W as a function of the indicative wet thickness, thereby changing the deposition position 24N of the insulator material N on the substrate S. The insulator material deposition unit 24 may be repositioned by the control unit as described above.

The insulator material deposition unit 24 may be further movable in the thickness direction T. Changing the height of the insulator material deposition unit 24 may result in a different shape and/or different spread of the insulator material N on the substrate S and on the deposited active material A. This may be utilized to adjust the deposition of the insulator material N, for example by the control unit.

Furthermore, the deposition speed of the insulator material N may be maintained, increased or decreased by operating the insulator material supply 48 accordingly. The insulator material supply 48 may also be controlled by the control unit.

**Claims**

1. A method of manufacturing a battery, particularly a secondary battery, comprising:

   depositing an active material on a substrate;
   depositing an insulator material on the substrate such as to extend over a boundary between the active material and the substrate, wherein the insulator material includes an insulator component and a liquid component;
   determining a indicative wet thickness of the insulator material at a position on the substrate that is offset from the boundary by a characteristic measurement distance;
   adapting the depositing of the insulator material as a function of the indicative wet thickness.

2. The method of claim 1,
   wherein the insulator material is configured such that, when depositing the insulator material, a ratio of a content of the liquid component to a content of the insulator component is 1 to 100, particularly 2 to 50, or 4 to 25, and more particularly 5 to 20.

3. The method of claim 1 or 2,
   wherein the thickness of the insulator material deposited on the substrate is between 10 μm and 1000 μm, particularly between 20 μm and 500 μm, and more particularly between 50 μm and 250 μm.

4. The method of any of the preceding claims, further comprising:
   exposing the insulator material to an energy input such as to evaporate the liquid component.

5. The method of claim 4,
   wherein, after the exposing the insulator material to the energy input, a thickness of a remaining insulator material is between 0.1 μm and 40 μm, particularly between 1 μm and 20 μm, and more particularly between 2 μm and 10 μm.

6. The method of any of the preceding claims,
   wherein the determining the indicative wet thickness of the insulator material is performed before the liquid component of the insulator material evaporates by X %, X being 0.1 to 10, with reference to a weight of the insulator material deposited.

7. The method of any of the preceding claims,

   wherein the depositing of the insulator material is performed using an ejector positioned over the substrate,
   wherein the adapting of the depositing of the insulator material as a function of the indicative wet thickness comprises repositioning the ejector.

8. The method of any of the preceding claims,
   wherein the adapting of the depositing of the insulator material as a function of the indicative wet thickness comprises increasing and/or decreasing a deposition speed of the insulator material.

9. The method of any of the preceding claims,

   wherein, after depositing the active material, the active material forms an edge portion on the substrate, the edge portion extending to the boundary and has a concave top surface opposite to the substrate,
   wherein, after depositing the insulator material, the insulator material at least partly covers the edge portion of the active material and extends beyond the edge portion onto the substrate.

10. The method of any of the preceding claims,

wherein the substrate is arranged in a plane perpendicular to a thickness direction, wherein the active material is deposited such that the boundary is formed along a process direction perpendicular to the thickness direction,
wherein the insulator material is deposited in a stripe shape over the boundary, the stripe shape being elongated along the process direction.

11. The method of any of the preceding claims,
wherein the characteristic measurement distance is between 0.1 mm and 10 mm, particularly between 0.1 mm and 6 mm, and more particularly between 0.5 mm and 3 mm.

12. The method of any of the preceding claims,
wherein the method steps of depositing the active material, depositing the insulator material, determining the indicative wet thickness and adapting the depositing of the insulator material are performed in a continuous manner while the substrate is moved in a process direction that is perpendicular to a thickness direction.

13. A manufacturing system of a battery, particularly a secondary battery, comprising:

an active material deposition unit configured to deposit an active material on a substrate;
an insulator material depositing unit configured to deposit an insulator material on the substrate and the active material deposited on the substrate;
a measurement unit configured to determine an indicative wet thickness of the insulator material deposited on the substrate at a characteristic measurement position; and
a control unit configured to control the insulator material depositing unit as a function of the indicative wet thickness of the insulator material.

14. The manufacturing system of claim 13, configured to perform the method of any of claims 1 to 12.

15. A battery, particularly a secondary battery, manufactured by the method of any of claims 1 to 12 and/or by the system of claim 13 or 14,

wherein the battery comprises an insulation coating covering the substrate and the active material deposited on the substrate and the boundary therebetween,
wherein the insulation coating has a thickness of 0.1 $\mu$m to 40 $\mu$m, particularly between 1 $\mu$m

and 20 $\mu$m, and more particularly between 2 $\mu$m and 10 $\mu$m.

10

```
┌─────────────────────┐
│         12          │
└─────────────────────┘
           │
┌─────────────────────┐
│         14          │
└─────────────────────┘
           │
┌─────────────────────┐
│         16          │
└─────────────────────┘
           │
┌─────────────────────┐
│         18          │
└─────────────────────┘
```

**FIG. 1**

20

**FIG. 2**

**FIG. 3**

**FIG. 4**

FIG. 5

FIG. 6

P
T
26
42
44
46
S
40

**FIG. 7A**

W
T
26
42
44
46
S
40

**FIG. 7B**

**FIG. 8A**

**FIG. 8B**

**FIG. 9**

Europäisches
Patentamt

European
Patent Office

Office européen
des brevets

# EUROPEAN SEARCH REPORT

Application Number

**EP 22 19 3807**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/108295 A1 (LG ENERGY SOLUTION LTD [KR]) 27 May 2022 (2022-05-27) | 15 | INV. H01M4/04 H01M4/139 |
| A | * the whole document * | 1-14 | |
| X | US 2014/255778 A1 (HUH JUN WOO [KR] ET AL) 11 September 2014 (2014-09-11) | 15 | |
| A | * the whole document * | 1-14 | |
| A | KR 2020 0088662 A (LG CHEMICAL LTD [KR]) 23 July 2020 (2020-07-23) * the whole document * | 1-15 | |

TECHNICAL FIELDS
SEARCHED        (IPC)

H01M

The present search report has been drawn up for all claims

| Place of search | Date of completion of the search | Examiner |
|---|---|---|
| Munich | 15 February 2023 | Swiatek, Ryszard |

EPO FORM 1503 03.82 (P04C01)

## ANNEX TO THE EUROPEAN SEARCH REPORT
## ON EUROPEAN PATENT APPLICATION NO.

EP 22 19 3807

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2023

| Patent document cited in search report | | Publication date | Patent family member(s) | | Publication date |
|---|---|---|---|---|---|
| WO 2022108295 | A1 | 27-05-2022 | CN 115280547 | A | 01-11-2022 |
| | | | EP 4099425 | A1 | 07-12-2022 |
| | | | KR 20220067279 | A | 24-05-2022 |
| | | | WO 2022108295 | A1 | 27-05-2022 |
| US 2014255778 | A1 | 11-09-2014 | NONE | | |
| KR 20200088662 | A | 23-07-2020 | NONE | | |

EPO FORM P0459

For more details about this annex : see Official Journal of the European Patent Office, No. 12/82